# EUROPEAN PATENT APPLICATION

(11) **EP 2 090 972 A2**
(43) Date of publication of application: **19.08.2009**
(21) Application number: 08173024.4
(22) Date of filing: 29.12.2008
(51) Int. Cl.: G06F 3/048

(54) **Mobile communication device equipped with touch screen and method of controlling the same**

(30) Priority: 15.02.2008 KR 20080013979
(71) Applicant: LG Electronics Inc., Seoul 150-721 (KR)
(72) Inventor: Ryu, Hye Jin, 153-023 Seoul (KR); Chung, Jin Woo, 153-023 Seoul (KR); Lee, Dong Seok, 153-023 Seoul (KR); Kim, Moon Ju, 153-023 Seoul (KR)
(74) Representative: Cabinet Plasseraud

(57) **Abstract**

The present invention relates to a mobile communication device and a method of controlling the mobile communication device. The method includes displaying a plurality of items, receiving a first touch signal, indicating that at least one item having a position on the screen has been selected, receiving a second touch signal, and scrolling at least a portion of the displayed items, other than the at least one selected item, while the at least one selected item remains fixed in its original position on the touch screen, in response to the second touch signal.

## Description

### CROSS-REFERENCE TO RELATED APPLICATION

This application claims the benefit of Korean Application No. 2008-0013979, filed February 15, 2008 in the Korean Intellectual Property Office, the disclosure of which is incorporated herein by reference.

### FIELD OF THE INVENTION

The present invention relates to a mobile communication device. In particular, it relates to a mobile communication device having a touch screen to control the display of a plurality of items and a method of using the same.

### DESCRIPTION OF THE RELATED ART

A mobile communication device is a portable device equipped with one or more functions, such as functions for performing voice and video communications, inputting and outputting information, and storing data. The mobile communication device is also equipped with functions, such as functions for capturing photos or motion images, playing music files or motion image files, gaming, receiving broadcasting data or signals, and wireless Internet. The mobile communication device has also been implemented to function as a comprehensive multimedia player.

In order to perform the above-mentioned various functions, mobile communication device's having a multimedia player, including both hardware and software, have been created. For example, a user interface environment has been created to allow a user search or select desired functions easily and conveniently.

The user interface has been designed in various forms. In one embodiment,
a double-sided LCD screen, which can be seen from both sides of the mobile communication device, is used. It is an advantage of this design that it allows for the design of a slim mobile communication device It is an additional advantage, that, a front touch screen can obviate the need for a keypad, a basic component of conventional mobile communication devices,.

Since the mobile communication device has a limited space for the user interface, portability, and the like must be taken into consideration. Accordingly, even when a front touch screen is used, the size of the screen is inevitably limited. Therefore, in order to perform both input and output display functions using a front touch screen, the display needs to be controlled in various manners.

### SUMMARY OF THE INVENTION

A method of controlling a display of a mobile communication device having a touch screen is provided in the present invention. According to an embodiment of the present invention, the method includes displaying a plurality of items, receiving a first touch signal, indicating that at least one item having a position on the touch screen has been selected, receiving a second touch signal, and scrolling at least a portion of the displayed plurality of items, other than the at least one selected item, while the at least one selected item remains fixed in its original position on the touch screen, in response to the second touch signal. Representative items include items pertinent to a phonebook menu, a mail receive/transmit box menu, a MP3 player menu or a motion image player menu.

In an aspect of the present invention, the scrolled items are scrolled in a direction indicated by the second touch signal. In some embodiments, the second touch signal is a flick signal. The method may further include stopping the scrolling at a second selected item to execute a dragging operation of the at least one selected item to the second selected item, and executing a drop operation of the at least one selected item at the second selected item.

In another aspect of the present invention, the method further includes modifying the display of the at least one selected item from an original display to distinguish the at least one selected item from the scrolled items when the first touch signal is received. The method may also include returning the display of the at least one selected item to the original display when the first touch signal is terminated. The plurality of items may be pertinent to a phonebook menu, a mail receive/transmit box menu, a MP3 player menu or a motion image player menu.

In yet another aspect of the present invention, the method further includes at least one of setting a speed for scrolling the scrolled items and setting a range for the number of items that are scrolled. In some embodiments, first touch signal indicates that a single item has been selected and the method may further include opening the single, selected item after the first touch signal is received for a predetermined period of time.

A mobile communication device that includes a touch screen for displaying a plurality of items and a controller for indicating that at least one displayed item has been selected in response to a first touch signal and scrolling at least a portion of the displayed items, other than the at least one selected displayed item, while the at least one selected displayed item remains fixed in its original position on the touch screen, in response to a second touch signal. Representative items include items correspond to files pertinent to a phonebook menu, a mail receive/transmit box menu, a MP3 player menu, or a motion image player menu. In some embodiments, the second touch signal is a flick signal is also provided in the present invention.

In some embodiments, the controller is also for stopping the scrolling to execute a dragging operation and execute a drop operation or modify the display of the at least one selected item. And in some embodiments, the mobile communication device also includes memory for storing files corresponding to the plurality of items.

In an aspect of the present invention, the controller also controls a file corresponding to a single, selected item after the first touch signal is received for a predetermined period of time. Preferably, the plurality of items correspond to files pertinent to a phonebook menu, a mail receive/transmit box menu, a MP3 player menu, or a motion image player menu.

### BRIEF DESCRIPTION OF THE DRAWINGS

The above and other features and advantages of the present invention will become more apparent by describing in detail preferred embodiments thereof with reference to the attached drawings.

FIG. 1 is a block diagram of a mobile communication device according to an embodiment of the present invention.

FIG. 2 is a front perspective view of the mobile communication device according to an embodiment of the present invention.

FIG. 3 is a rear perspective view of the mobile communication device according to an embodiment of the present invention.

FIG. 4 is a flowchart illustrating controlling the mobile communication device according to an embodiment of the present invention.

FIGS. 5 to 8 are screens displayed on a display unit to which reference is made in order to illustrate controlling the mobile communication device according to an embodiment of the present invention.

### DETAILED DESCRIPTION OF THE PREFERRED EMBODIMENTS

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers are used throughout the drawings to refer to the same or similar parts.

Representative mobile communication devices useful in accordance with the invention include mobile phones, smart phones, notebook computers, communication devices for digital broadcasting, personal digital assistants (PDAs), portable multimedia players (PMPs), and navigation devices.

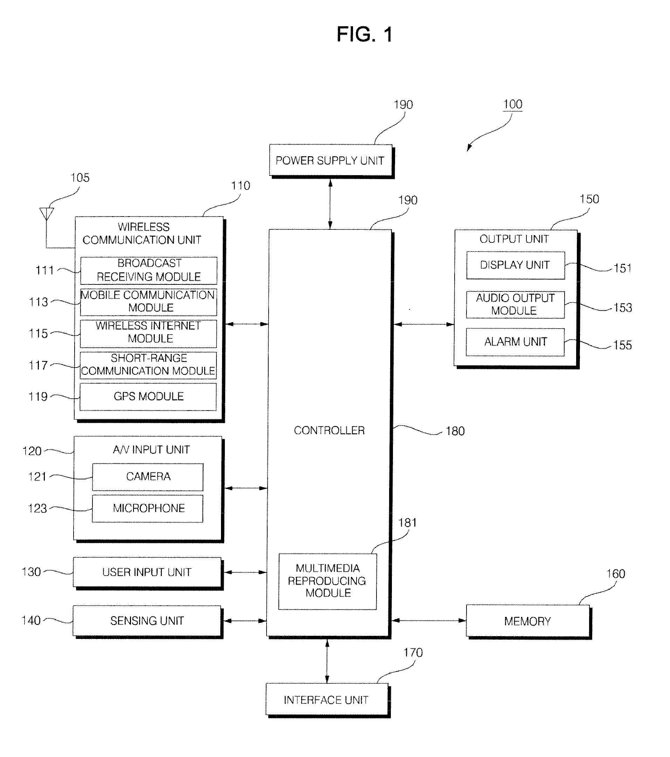

Referring to FIG. 1, a mobile communication device 100 includes a wireless communication unit 110, an audio/video (A/V) input unit 120, a user input unit 130, a sensing unit 140, an output unit 150, memory 160, an interface unit 170, a controller 180, and a power supply unit 190. In some embodiments, two or more of these components are combined into one component. In other embodiments, one component is divided into two or more components.

In the embodiment shown in FIG. 1, the wireless communication unit 110 includes a broadcasting receiving module 111, a mobile communication module 113, a wireless Internet module 115, a short-range communication module 117, and a global positioning system (GPS) module 119. The broadcasting receiving module 111 receives at least one of a broadcasting signal or broadcasting-related information from an external broadcasting management server through broadcasting channels. The broadcasting management server is a server for creating and transmitting the broadcasting signals or the broadcasting-related information or a server for receiving previously generated broadcasting signals and previously generated broadcasting-related information and transmitting signals or related information to a mobile communication device.

The broadcasting-related information refers to information pertinent to a broadcasting channel, a broadcasting program and/or a broadcasting service provider. The broadcasting signal includes not only TV broadcasting signals, radio broadcasting signals, and data broadcasting signals, but also broadcasting signals in which TV broadcasting signals or radio broadcasting signals are combined with data broadcasting signals. In some embodiments, the broadcasting-related information is provided over a mobile communication network. In these embodiments, the broadcasting-related information is received by the mobile communication module 113. The broadcasting-related information may be in various forms. For example, the broadcasting-related information may be in the form of electronic program guide (EPG) of the digital multimedia broadcasting (DMB) or electronic service guide (ESG) of the digital video broadcast-handheld (DVB-H).

The broadcasting channels include satellite channels and terrestrial wave channels.

The broadcasting receiving module 111 receives the broadcasting signals using various broadcasting systems. In some embodiments, the broadcasting receiving module 111 receives broadcasting signals using a digital broadcasting system, such as digital multimedia broadcasting-terrestrial (DMB-T), digital multimedia broadcasting-satellite (DMB-S), media forward link only (MediaFLO), digital video broadcast-handheld (DVB-H), and integrated services digital broadcast-terrestrial (ISDB-T). The broadcasting receiving module 111 is suitable not only for the digital broadcasting systems, but also for all broadcasting systems providing broadcasting signals. At least one of broadcasting signals or broadcasting-related information, received through the broadcasting receiving module 111, may be stored in the memory 160.

The mobile communication module 113 transmits and receives radio signals to and from at least one of a base station, an external communication device, and a server over a mobile communication network. The radio signals include voice call signals, video call signals, or various forms of data according to transmission/reception of text/multimedia messages.

The wireless Internet module 115 provides wireless Internet access. The wireless Internet module 115 can be built internally or externally to the mobile communication device 100. The short-range communication module 117 provides local area communication. Local area communication technology includes BLUETOOTH, radio frequency identification (RFID), infrared data association (IrDA), ultra wideband (UWB), and ZigBee. The GPS module 119 receives position information from a plurality of GPS satellites.

The A/V input unit 120 inputs audio signals or video signals. In some embodiments, the A/V input unit includes a camera 121 and a microphone 123. The camera 121 processes image frames, such as still images or motion images, which are captured by an image sensor when the mobile communication device 100 is in a video call mode or capturing mode. The processed image frames are displayed on a display unit 151.

The image frames processed by the camera 121 can be stored in the memory 160 or transmitted through the wireless communication unit 110. In some embodiments, a plurality of cameras 121 are included in the mobile communication device 100.

The microphone 123 receives external sound signals when the mobile communication device 100 is in a call mode, a recording mode, a voice recognition mode, and converts the received sound signals into electrical voice data. In the call mode, the voice data is converted into a format which can be transmitted to a mobile communication base station through the mobile communication module 113. The microphone 123 can employ a variety of noise removal algorithms for removing noise occurring in the process of receiving external sound signals.

The user input unit 130 generates entry data, is input by a user to control the operation of the mobile communication device 100. The user input unit 130 typically includes a keypad, a dome switch, a touch pad (static pressure/constant electricity), a jog wheel, a jog switch, a finger mouse or combinations thereof. In a preferred embodiment a touch screen is formed of a mutually layered structure of the touch pad and the display unit 151, which will be described later on, is referred to as a touch screen.

The sensing unit 140 senses a current status of the mobile communication device 100. The current status can include a closed state of the mobile communication device 100, the position of the mobile communication device, or whether the mobile communication device is in touch with a user or not. For example, when the mobile communication device 100 is a slide type phone, the sensing unit 140 senses whether the phone is open or closed. The sensing unit 140 may also sense whether power is being supplied by the power supply unit 190 and whether the interface unit 170 is connected to an external device. After sensing a current status, the sensing unit 140 generates a sensing signal for controlling the operation of the mobile communication device 100.

In some embodiments, the sensing unit 140 includes a proximity sensor. The proximity sensor detects an approaching object or objects without being contacted. The proximity sensor detects adjacent objects by employing a change of AC magnetic field, a change of static magnetic field, or the rate of capacitance. Two or more proximity sensor can be provided in the sensing unit 140.

The output unit 150 outputs audio signals, video signals or alarm signals and includes the display unit 151, an audio output module 153, and an alarm unit 155. The display unit 151 displays information processed in the mobile communication device 100. For example, when the mobile communication device 100 is in the call mode, the display unit 151 displays a user interface (UI) or a graphic user interface (GUI), relating to a call. When the mobile communication device 100 is in the video call mode or the capturing mode, the display unit 151 displays captured and received images individually or at the same time along with the UI or GUI.

In those preferred embodiments employing a touch screen, the display unit is used as an input device as well as the output device. The touch screen includes a touch screen panel and a touch screen panel controller. The touch screen panel is a transparent panel attached to the outside of the mobile communication device 100 and is connected to an internal bus within the mobile communication device. The touch screen panel monitors whether there is a touch input and when a touch input is recognized, sends a signal to the touch screen panel controller. The touch screen panel controller processes the signal received from the touch screen panel and transmits the corresponding data to the controller 180 so that the controller recognizes whether there has been a touch input or which area of the touch screen has been touched.

The display unit 151 includes at least one of a liquid crystal display, a thin film transistor-liquid crystal display, an organic light-emitting diode, a flexible display, or a 3D display. Two or more display units 151 can be used. For example, the mobile communication device 100 may be equipped with both an external display unit and an internal display unit.

The audio output module 153 outputs audio data received from the wireless communication unit 110 in the incoming call mode, the call mode, the record mode, the voice recognition mode, or the incoming broadcasting mode or outputs data stored in the memory 160. The audio output module 153 also outputs sound signals pertinent to the functions performed in the mobile communication device 100, for example, the sound of a received call signal or the sound of a received message. The audio output module 153 includes a speaker or a buzzer.

In some embodiments, the alarm unit 155 outputs signals to inform the user of events generated in the mobile communication device 100. For example, events generated in the mobile communication device 100 include an incoming call signal, a received message, and an entered key signal input. The alarm unit 155 may also output signals to inform the generated events in a manner that is different from audio signals or video signals. For example, when the alarm unit 155 is set to output signals via vibration mode, if a call signal is received or a message is received, the alarm unit 155 generates vibration to inform the user of reception of the call signal or message. Alternatively, when a key signal is input, the alarm unit 155 generates vibration as a feedback to the input key signal. It is to be understood that the signals informing the user of events may also be output through the display unit 151 or the audio output module 153.

The memory 160 stores programs necessary to process and control the controller 180 and temporarily stores input or output data, such as phonebook entries, messages, still images, and motion images. The memory 160 includes at least one type of storage media, including a flash memory-type, a hard disk-type, a multimedia card micro-type, a card-type memory, such as SD memory and XD memory, RAM, and ROM. In some embodiments, the mobile communication device 100 also manages a web storage serving as the storage of the memory 160 on the Internet.

The interface unit 170 interfaces with all external devices connected to the mobile communication device 100. Examples of the external devices include a wired/wireless headset, an external charger, wired/wireless data ports, a memory card, a card socket such as subscriber identification module (SIM) /user identity module (UIM) cards, an audio input/output (I/O) communication device, a video I/O communication device, and an earphone. The interface unit 170 receives data or power from the external devices, transfers the data or power to respective components of the mobile communication device 100, and transmits data of the mobile communication device to the external devices.

The controller 180 typically controls operation of each of the components and also controls the overall operation of the mobile communication device 100. For example, the controller 180 performs pertinent controls and processes for voice call, data communication, and video telephony. In some embodiments, the controller 180 includes a multimedia play module 181. The multimedia play module 181 can be hardware located within the controller 180 or software located elsewhere.

The power supply unit 190 is supplied from an external power source or an internal power source. It supplies the power necessary for the operation of each component under the control of the controller 180.

The mobile communication device 100 in accordance with the present invention has been described from the viewpoint of its components and their. Next, the mobile communication device 100 is further described from the viewpoint of the components and their structure.

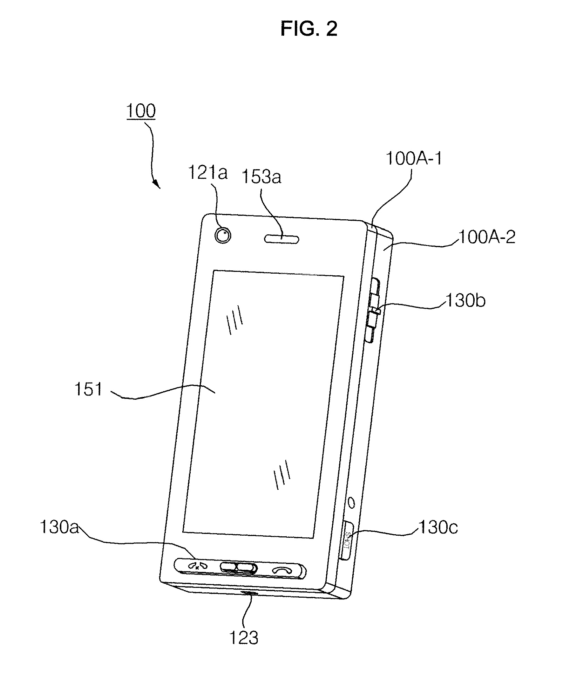

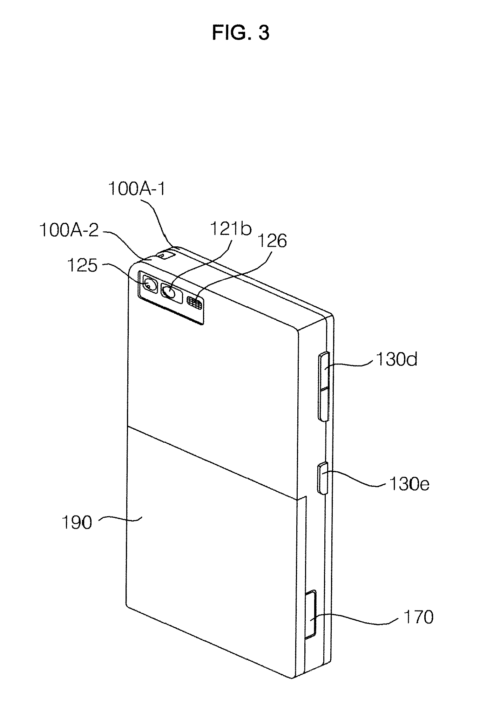

Representative types of mobile communication devices include a folding type, a bar type, a swing type, and a sliding type. The bar type mobile communication device equipped with a full touch screen is described in FIGS. 2 and 3 as an example. However, it is to be understood that the present invention is not limited to the bar type mobile communication device, but instead may be applied to all types of mobile communication devices.

Referring to FIG. 2, a casing is comprised of a front casing 100A-1 and a rear casing 100A-2. A variety of electronic components are built in the space formed between the front casing 100A-1 and the rear casing 100A-2. In some embodiments, at least one middle casing is disposed between the front casing 100A-1 and the rear casing 100A-2. The casings can be formed from synthetic resin or from metal, such as stainless steel (STS) or titanium (Ti).

In the front casing 100A-1 are disposed the display module 151, a first audio output module 153a, a first camera 121 a, and a first user input unit 130a. A second user input unit 130b, a third user input unit 130c, and a microphone 123 are disposed on the sides of the rear casing 100A-2.

The display unit 151 includes a LCD, an OLED or the like for visually displaying information. A touch pad (not shown) overlaps with the display unit 151 in a layered structure, such that the display unit operates as a touch screen that enables the input of information in response to the touch of a user.

The first audio output module 153a is a receiver or a speaker. The first camera 121 a captures images or motion images of a user. The microphone 123 receives voice and other sounds.

The first, second and third user input units 130a, 130b, and 130, collectively form the user input unit 130. The user input unit 130 can respond to any method of input as long as it supports a tactile input.

In some embodiments, the user input unit 130 includes a dome switch or a touch pad to receive commands or information by push or touch manipulation of a user. In other embodiments, the, the user input unit 130 includes a wheel or jog for rotating a key, or a Joystick. In terms of the function, the first user input unit 130a inputs commands such as 'start,' 'end,' and 'call.' The second user input unit 130b can be used as a mode setting key for entering an operating mode. The third user input unit 130c may be a hot key for activating special functions within the mobile communication device 100.

Referring to FIG. 3, a fourth user input unit 130d, a fifth user input unit 130e, and the interface unit 170 are disposed on the side of the rear casing 100A-2. A second camera 121 b is mounted on the rear side of the rear casing 100A-2. The second camera 121 b has a photographing direction substantially opposite to that of the first camera 121 a and has a different number of pixels than does the first camera 121 a. For example, the first camera 121 a has a relatively low number of pixels, sufficient to capture an image of a user's face and transmit the captured image to a counterpart on a video call. The second camera 121 b has a relatively high number of pixels to capture general subjects that are not immediately transmitted.

A flash 126 and a mirror 125 are further disposed adjacent to the second camera 121 b. The flash 126 illuminates light to a subject when the subject is photographed by the second camera 121 b. The mirror 125 reflects a user's face when the user wants to have a self-portrait picture taken using the second camera 121 b.

A second audio output module is disposed in the second rear casing 100A-2. Together with the first audio output module 153a, the second audio output module may provides a stereo function and is used for a call in a speakerphone mode.

An antenna for receiving broadcasting signals extends from one side of the second rear casing 100A-2.

The interface unit 170 enables the mobile communication device 100 to exchange data with external devices. The interface unit 170 connects to at least one of an earphone, a port for short range communication, and power supply devices for supplying power to the mobile communication device 100 in a wired or wireless manner. The interface unit 170 can also be a card socket for receiving external cards, such as a SIM, a UIM and a memory card for storing information.

The power supply unit 190 supplies power to the mobile communication device 100 and is mounted on the part of the rear casing 100A-2. The power supply unit 190 can be, for example, a rechargeable battery detachably coupled to the rear casing 100A-2.

In the embodiment shown in "FIG. 3, the second camera 121b and other components are disposed in the rear casing 100A-2, but the present invention is not limited to the above described arrangement. For example, in some embodiments, there is no second camera 121 b, but the first camera 121a is rotatably formed, to permit photographing in the direction of the second camera.

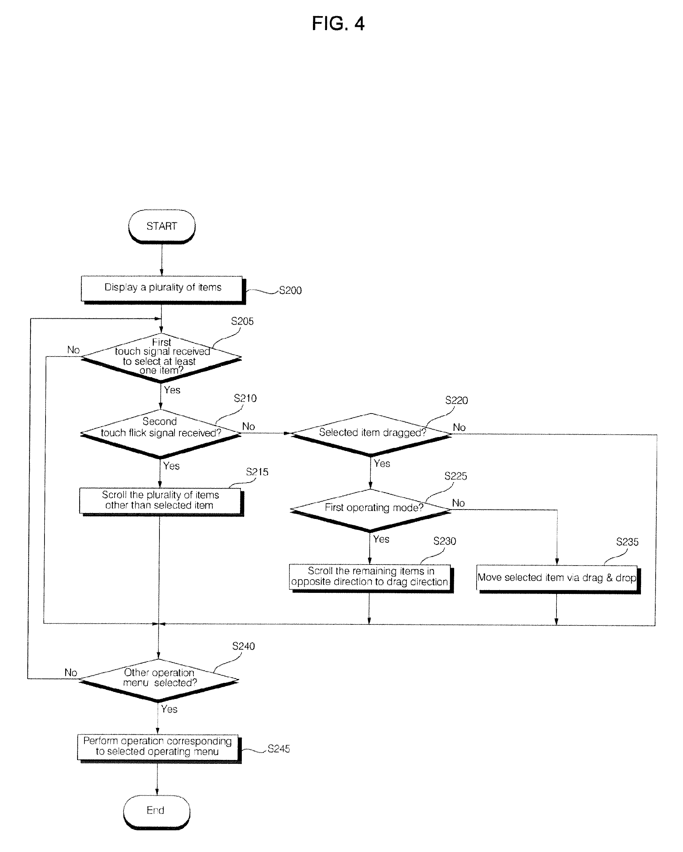

Referring to FIG. 4, when a menu, such as a phonebook menu, a mail receive/transmit box menu, a MP3 player menu, and a motion image player menu, is selected by a user of the mobile communication device 100, a file list comprising a plurality of items is displayed on the display unit 151 comprising a touch screen in S200. At least one item having a position on the touch screen receives a first touch signal in response to the user's touch input and the at least one item in the file list is selected in S205. The controller 180 determines whether there was a touch input, which part of the display unit 151 was touched, and the direction of the touch input based on the signal received from the display unit.

The controller 180 also determines whether the first touch signal was followed by a second touch signal in S210. In some embodiments of the present invention, the second touch signal is a flick signal. The flick signal is generated by slightly drawing a line on the touch screen. In other embodiment of the present invention, the second touch may be any type of touch inputs other than an input generating the flick signal.

If the first signal, selecting the at least one item from the file list, was followed by the flick signal, at least a portion of the displayed plurality of items are scrolled while the selected at least one item remains fixed in its original position on the touch screen in S215. The scrolled items are scrolled in a direction indicated by the second touch signal.

The scrolling may be stopped at a second selected item to execute a dragging operation of the at least one selected item to the second selected item. When the at least one selected item is dragged in S220, a first operating mode can be set according to the setting of a set operating mode in S225 (YES) and the plurality of items other than the at least one selected item are scrolled in a direction which is opposite to the dragging direction in S230. However, when the first operating mode is not set in S225 (NO), dragging and drop operations of the at least one selected item is executed at the second selected item in S235. The setting of the first operating mode may be carried out based on any one of a touch input, a key entry, and a user input employing a proximity sensor.

If a new application menu is selected in S240 (YES), the selected new application is executed in S245. However, no new menu is selected in step S240 (NO), the above described steps are repeated by going back to S205.

Through the above described process, the displayed items in the file list other than the selected at least one item can be scrolled using the touch input and the flick input. Alternatively, the selected at least one item may be moved according to a set mode via dragging and drop operation. In the above described embodiments, when a second touch signal, such as touch flick, long touch, short touch, and double touch, is input through the touch screen while a first touch signal, indicating that at least one item has been selected in the file list, is received, the selected at least one item remains fixed in the file list, but other items in the file list are scrolled according to the effects assigned to the second touch signal.

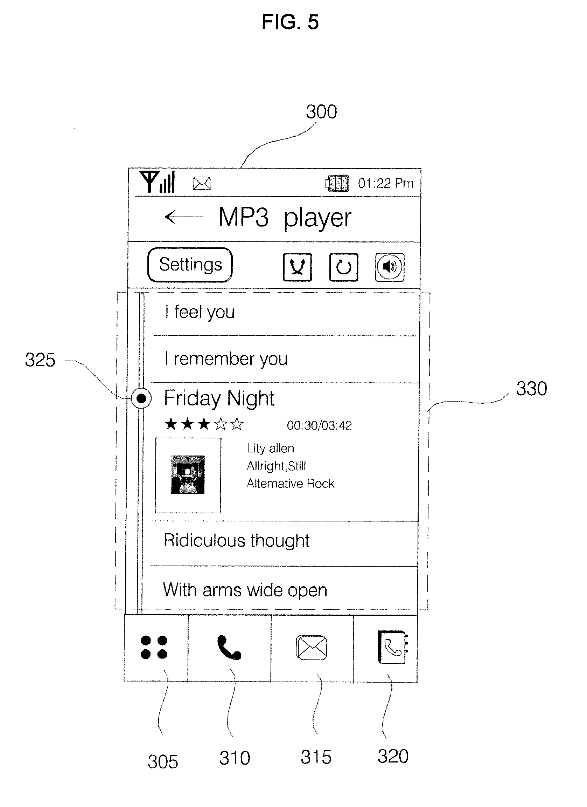

FIG. 5 shows an example of a MP3 player screen in the mobile communication device 100. Indicator icons 360, including an icon for controlling the play of MP3 files, are displayed at an upper portion of a MP3 player screen 300. A list 330 of playable files is displayed at a center portion of the MP3 player screen 300. When a file to be played is selected from the file list 330, file information relating to the selected file is displayed along with an icon 325, indicating the file that is being played. An icon 305 for selecting other menus, an icon 310 for a call, an icon 315 for selecting a message menu, and an icon 320 for selecting a phonebook menu are displayed at a lower portion of the MP3 player screen 300.

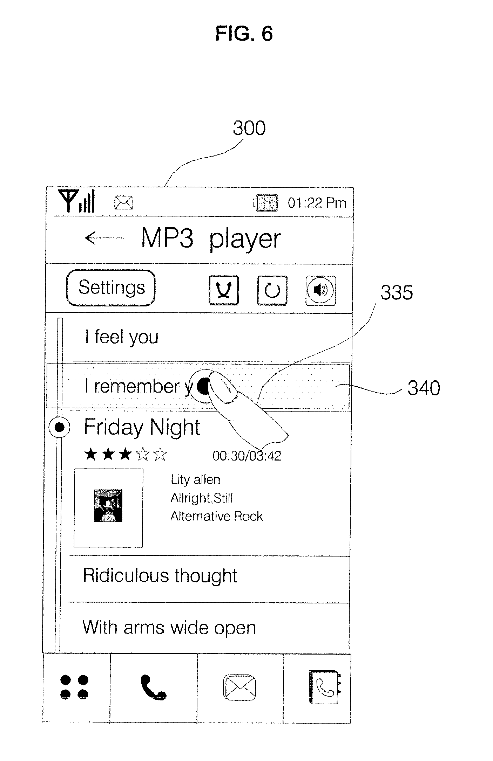

FIG. 6 shows a state in which at least one item is selected from a file list 330 displayed on the MP3 player screen 300. When a first touch signal 335 is received on the file list 330 displayed on the touch screen, an item in contact with the first touch signal becomes a selected item 340. The selected item 340 may be displayed distinguishably from other items in the file list 330 and returned to its original display when the first touch signal 335 is released. Alternatively, the distinguishably displayed selected item 340 may be displayed in its original shape and may be controlled in various ways according to a default setting.

The MP3 player screen 300 may be configured such that, if the selected item 340 is immediately touched up without being dragged while the first touch signal is active, a file corresponding to the selected item 340 is played. Or, the mobile communication device 100 may be configured such that after a first touch signal 335 is received on the touch screen for a predetermined period of time, a single item in the file list 330 selected by the first touch signal is open.

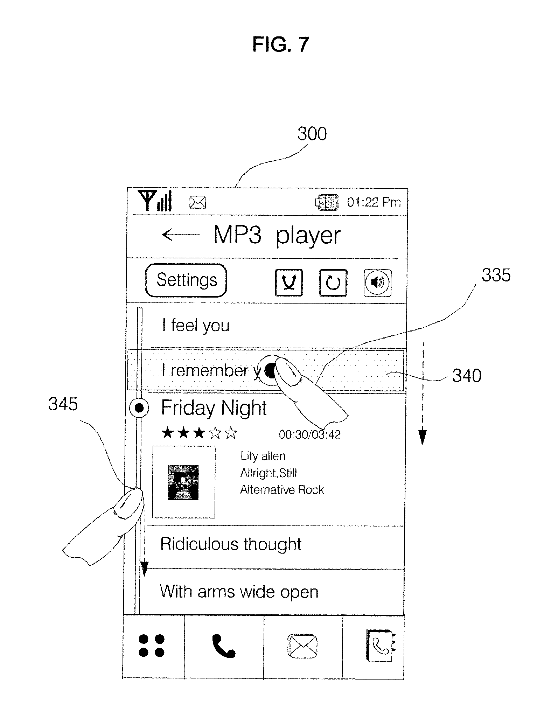

FIG. 7 illustrates how a flick signal 345 or second signal is entered while at least one item has been selected through the first touch signal 335 in the MP3 player screen 300. When the flick signal 345 is received or a line is drawn on the touch screen after the at least one item 340 has been selected by the first touch signal 335, a plurality of items in the file list 330 other than the selected at least one item are scrolled in a direction indicated by the flick signal. For example, the direction of the flick signal 345 is a downward direction and the plurality of items in the file list 330 other than the selected at least one item 340 are scrolled in the downward direction on the MP3 player screen 300. The speed for scrolling the scrolled items and the range for the number of items that are scrolled by the flick signal 340 may be set by a user or have been set by default.

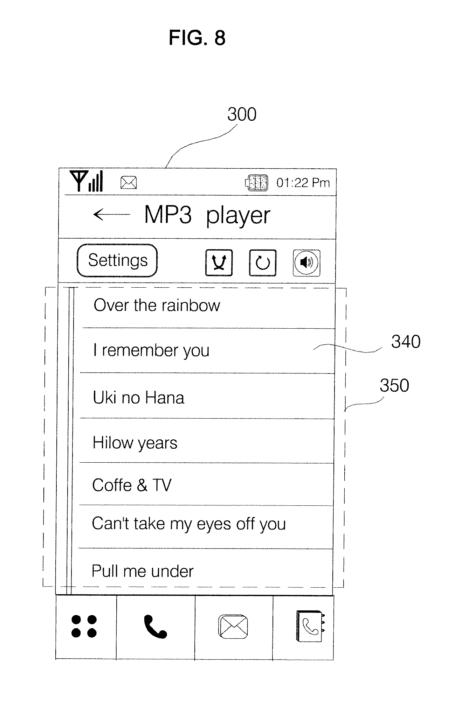

Referring to FIG. 8, after the plurality of items in the file list 330 other than the at least one item selected by the first touch signal 335 are scrolled by the flick signal 345 or second touch signal. In response to the flick signal 345, the plurality of items other than the selected at least one item 340 are scrolled and the arrangement of the file list is changed such that only the selected at least one item remains fixed in its original position in the file list 350.

As described above, the arrangement of a file list displayed on a touch screen of a mobile communication device 100 can be changed using the combination of at least two types of touch signals, for example, the first touch signal and the flick signal, by scrolling the plurality of items in the file list other than the at least one item selected by the first touch signal. Not only the flick signal, but also a different type of touch signal, such as long touch signal, short touch signal, or double touch signal, may be input to perform the above described operation in the mobile communication device 100. Accordingly, even when a small-sized touch screen is applied to a mobile communication device 100, the operation of the mobile communication device can be controlled efficiently on the small-sized touch screen by using combination the above-discussed touch input signals.

In the above described embodiment, a plurality of files displayed on the MP3 player screen have been described as an example. However, the method of controlling the operation according to the present invention may also be applied to other types of applications requiring scrolling in mobile communication devices, such as a phonebook menu, a mail receive/transmit box menu, a MP3 player menu, and a motion image player menu.

The present invention may be implemented as a code readable by a processor included in a mobile communication device, such as a mobile station modem (MSM), in the processor-readable recording medium. The processor-readable recording medium can include all kinds of recording devices in which data readable by the processor is stored. For example, the processor-readable recording medium includes ROM, RAM, CD-ROM, magnetic tapes, floppy disks, and optical data storages, and can also be implemented in the form of carrier waves, such as transmission over the Internet. Further, the processor-readable recording medium may be distributed into computer systems connected over a network such that codes readable by a processor can be stored and executed in a distributed manner.

The foregoing embodiments and advantages are merely exemplary and are not to be construed as limiting the present invention. The present teaching can be readily applied to other types of apparatuses and processes. The description of the present invention is intended to be illustrative, and not to limit the scope of the claims. Many alternatives, modifications, and variations will be apparent to those skilled in the art.

## Claims

1. A method of controlling a display of a mobile communication device having a touch screen, the method comprising:
displaying a plurality of items;
receiving a first touch signal, indicating that at least one item having a position on the touch screen has been selected;
receiving a second touch signal; and
scrolling at least a portion of the displayed plurality of items, other than the at least one selected item, while the at least one selected item remains fixed in its original position on the touch screen, in response to the second touch signal.

2. The method of claim 1, wherein the scrolled items are scrolled in a direction indicated by the second touch signal.

3. The method of claim 1, wherein the second touch signal is a flick signal.

4. The method of claim 1, further comprising:
stopping the scrolling at a second selected item to execute a dragging operation of the at least one selected item to the second selected item.

5. The method of claim 4, further comprising:
executing a drop operation of the at least one selected item at the second selected item.

6. The method of claim 1, further comprising:
modifying the display of the at least one selected item from an original display to distinguish the at least one selected item from the scrolled items when the first touch signal is received.

7. The method of claim 6, further comprising:
returning the display of the at least one selected item to the original display when the first touch signal is terminated.

8. The method of claim 1, wherein the plurality of items are pertinent to a phonebook menu, a mail receive/transmit box menu, a MP3 player menu or a motion image player menu.

9. The method of claim 1, further comprising:
setting a speed for scrolling the scrolled items, or a range for the number of items that are scrolled.

10. The method of claim 1, further comprising:
opening a single, selected item after the first touch signal is received for a predetermined period of time.

11. A mobile communication device comprising:
a touch screen for displaying a plurality of items; and
a controller for indicating that at least one displayed item has been selected in response to a first touch signal and scrolling at least a portion of the displayed items, other than the at least one selected displayed item, while the at least one selected displayed item remains fixed in its original position on the touch screen, in response to a second touch signal.

12. The mobile communication device of claim 11, wherein the second touch signal is a flick signal.

13. The mobile communication device of claim 11, wherein the controller is additionally for modifying the display of the at least one selected item.

14. The mobile communication device of claim 11, further comprising:
memory for storing files corresponding to the plurality of items.

15. The mobile communication device of claim 11, wherein the controller is additionally for controlling a file corresponding to a single, selected item after the first touch signal is received for a predetermined period of time.
